(19) **Europäisches Patentamt**
**European Patent Office**
**Office européen des brevets**

(11) **EP 1 995 575 B1**

(12) **FASCICULE DE BREVET EUROPEEN**

(45) Date de publication et mention
de la délivrance du brevet:
**12.01.2022   Bulletin 2022/02**

(51) Int Cl.:
***G01H 13/00*** *(2006.01)*       ***G01P 15/097*** *(2006.01)*

(21) Numéro de dépôt: **08156845.3**

(22) Date de dépôt: **23.05.2008**

(54) **Système d'analyse de fréquence de dispositifs resonnants**

Frequenzanalysesystem von Resonanzvorrichtungen

System for analysing the frequency of resonant devices

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **25.05.2007   FR 0703733**

(43) Date de publication de la demande:
**26.11.2008   Bulletin 2008/48**

(73) Titulaire: **THALES
92400 Courbevoie (FR)**

(72) Inventeurs:
• **Legoll, Sébastien
26500, BOURG LES VALENCE (FR)**
• **Guillard, Patrice
26000, VALENCE (FR)**

(74) Mandataire: **Marks & Clerk France
Immeuble "Visium"
22, avenue Aristide Briand
94117 Arcueil Cedex (FR)**

(56) Documents cités:
**EP-A- 1 132 728          WO-A-02/087083
US-A1- 2004 123 665**

**Description**

Le domaine de l'invention est celui des dispositifs résonnants ou vibrants. On sait que le principe de mesure d'un grand nombre de capteurs est basé sur la mesure de la fréquence des oscillations d'un système mécanique oscillant soit en oscillations libres, soit en oscillations forcées, cette fréquence dépendant du paramètre que l'on cherche à mesurer. On peut citer, à titre d'exemple, les accéléromètres à barreau vibrant encore appelés VBA utilisés pour la mesure des accélérations, étant entendu que ce qui suit peut se généraliser aisément à tout système vibrant.

Le document US2004/0123665 A comprend un instrument pour induire une vibration des éléments de renforcement ainsi qu'un système d'analyse de la fréquence d'oscillation. Le document WO 02/087083 décrit un système d'analyse de la fréquence d'oscillation, en utilisant des composantes de quadrature et la transformée de Hilbert.

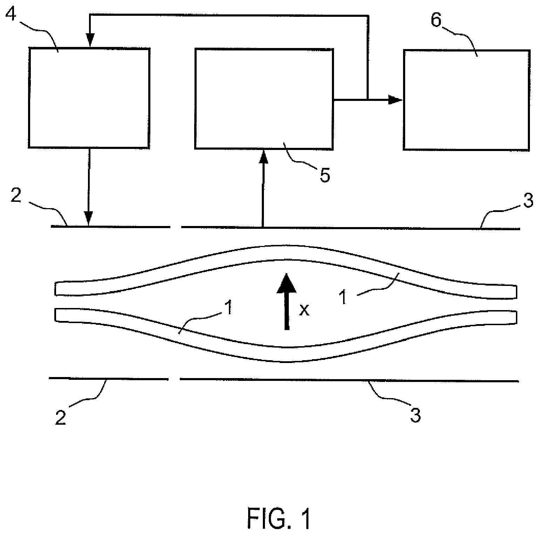

On trouvera en figure 1 un schéma de principe d'un accéléromètre de ce type. Il comprend essentiellement une masse reliée à deux poutres identiques 1 et parallèles formant diapason, chaque poutre porte deux électrodes 2 et 3, la première électrode 2 servant à l'excitation et la seconde électrode 3 à la détection. Sous l'effet d'une accélération suivant l'axe x sensible de l'accéléromètre, la masse se déplace en translation suivant cet axe sensible en provoquant une extension ou une contraction du diapason et en modifiant ainsi sa fréquence de résonance suivant la relation 0 ci-dessous.

$$\text{Relation 0} \quad f_a = f_0 \sqrt{1 + \frac{a}{\gamma_C}}$$

avec $f_a$: fréquence de résonance de l'accéléromètre soumis à l'accélération,

$f_0$ : fréquence de résonance du capteur au repos, c'est-à-dire soumis à une accélération d'entrée nulle,
a : accélération appliquée au capteur,
$\gamma_c$: accélération critique de flambage, paramètre physique du résonateur.

Le principe de mesure de la fréquence est le suivant. L'excitation et la vibration des poutres sont entretenues par l'électrode d'excitation 2 couvrant une partie de la longueur de chaque poutre. La tension d'excitation est la somme d'une tension continue $V_0$ et d'une tension alternative v à la fréquence de résonance de l'oscillateur, créée par rebouclage du signal de sortie du capteur. Le reste de la surface des deux poutres est couvert par une électrode de détection 3 polarisée à la tension $V_0$. Le mouvement de vibration des poutres faisant varier la distance entre les poutres et cette électrode, un courant de détection apparaît dans l'électrode. Ce courant passe dans un filtre 5 amplificateur de charge. La tension à la sortie de ce filtre constitue le signal de sortie du capteur. Ce signal de sortie est utilisé d'une part pour le traitement 6 permettant de retrouver, à partir de la mesure de fréquence de résonance, l'accélération appliquée au capteur et d'autre part comme entrée dans le rebouclage 4 permettant de générer la tension alternative d'excitation.

A partir des signaux renvoyés par l'accéléromètre, on doit retrouver l'accélération appliquée au capteur. La nature non linéaire de la relation 0 pose un problème fondamental. En effet, l'accélération a dans la relation 0 contient non seulement l'accélération utile appliquée au capteur mais également des termes de vibration pouvant atteindre des valeurs très élevées. Le système masse-ressort formé par la masse et le résonateur présente une fréquence de résonance $f_R$. A cette fréquence, les bruits sont fortement amplifiés. L'accélération appliquée au capteur comporte un terme basse fréquence dont la bande est typiquement comprise sur un intervalle variant de 0 Hz à 400 Hz qui est l'accélération statique ou dynamique que l'on souhaite déterminer grâce au traitement et un terme centré sur la fréquence $f_R$ qui est typiquement comprise entre 3 kHz et 5 kHz qui correspond au bruit filtré par le système masse-ressort et qui forme des vibrations parasites susceptibles de dégrader les résultats du traitement. Ces termes entraînent à la fois une erreur de biais et une erreur de facteur d'échelle au niveau de l'accélération. Le niveau des vibrations étant aléatoire, ces erreurs ne peuvent être compensées. Bien entendu, ces problèmes sont communs à tout dispositif soumis à une variation parasite de sa grandeur d'entrée.

On peut représenter le mouvement des poutres par un oscillateur équivalent monodimensionnel suivant la direction et le sens de l'axe sensible du capteur. La position notée A de cet oscillateur vérifie l'équation différentielle suivante notée relation 1 :

$$\text{Relation 1 :} \quad \frac{d^2 A}{dt^2} + \frac{\omega_0}{Q_R} \frac{dA}{dt} + \omega_0^2 (1 + \frac{a}{\gamma_C}) A + \beta_i A^3 = e(t)$$

avec $\omega_0$ pulsation de résonance au repos du capteur, sous une accélération nulle,

$Q_R$ : facteur de qualité du résonateur,

$\gamma_c$ : accélération critique de flambage du capteur,

a : accélération appliquée au capteur. Cette accélération comprend à la fois le terme basse fréquence que l'on cherche à mesurer et des termes haute fréquence dus aux vibrations,

$\beta_i$ : coefficient de non linéarité d'ordre 3,

e(t) : terme d'excitation, fonction du temps.

$$\omega_0 \sqrt{1+\frac{a}{\gamma_C}}$$ est la pulsation de résonance du système vibrant soumis à l'accélération a.

Généralement, on emploie deux résonateurs ayant des axes sensibles de même direction et de sens opposé permettant d'effectuer la mesure sur deux voies différentes. On a alors les deux équations suivantes, en utilisant les mêmes notations que précédemment, l'indice 1 faisant référence à la voie 1 et l'indice 2 à la voie 2.

Relation 2 sur la voie 1

$$\frac{d^2 A_1}{dt^2}+\frac{\omega_{0,1}}{Q_{R1}}\frac{dA_1}{dt}+\omega_{0,1}^2(1+\frac{a}{\gamma_{C,1}})A_1+\beta_{i,1}A_1^{\,3}=e_1(t)$$

Relation 3 sur la voie 2

$$\frac{d^2 A_2}{dt^2}+\frac{\omega_{0,2}}{Q_{R2}}\frac{dA_2}{dt}+\omega_{0,2}^2(1-\frac{a}{\gamma_{C,2}})A_2+\beta_{i,2}A_2^{\,3}=e_2(t)$$

Le courant dans l'électrode de détection est proportionnel à la vitesse de l'oscillateur équivalent. La fonction de transfert du filtre amplificateur de charge est celle d'un intégrateur. La tension en sortie de l'amplificateur de charge est obtenue par intégration de la vitesse de l'oscillateur équivalent. Si le signal correspondant à la position de l'oscillateur comporte un terme basse fréquence, ce terme ne se retrouve pas en sortie de l'amplificateur de charge. La tension en sortie de l'amplificateur de charge est alors proportionnelle aux termes haute fréquence du signal de position de l'oscillateur.

En notant $U_1$ et $U_2$ les tensions en sortie du filtre sur les voies 1 et 2, on a les relations suivantes :
$U_1 = K_1 I_1$ et $U_2 = K_2 I_2$ avec $K_1$ et $K_2$ constantes connues, dépendant des paramètres mécaniques et électriques des résonateurs et de l'amplificateur de charge, $I_1$ et $I_2$ représentant les parties haute fréquence de $A_1$ et $A_2$.

Pour déterminer l'accélération à partir de la fréquence, une première méthode consiste à considérer que la fréquence du signal de sortie du capteur notée $f$ est reliée à l'accélération par la relation $$f \approx f_0 \sqrt{1+\frac{a}{\gamma_C}}$$ .

En notant $f_1$, et $f_2$ les fréquences des signaux de sortie sur les voies 1 et 2 et en faisant un développement limité desdites fréquences, on obtient les relations suivantes :

$$\text{Relation 4} \qquad f_1 \approx f_{0,1}\sqrt{1+\frac{a}{\gamma_{C,1}}} \approx f_{0,1}(1+\frac{a}{2\gamma_{C,1}}-\frac{a^2}{8\gamma_{C,1}^2}+\frac{a^3}{16\gamma_{C,1}^3}+...)$$

$$\text{Relation 5} \qquad f_2 \approx f_{0,2}\sqrt{1-\frac{a}{\gamma_{C,2}}} \approx f_{0,2}(1-\frac{a}{2\gamma_{C,2}}-\frac{a^2}{8\gamma_{C,2}^2}-\frac{a^3}{16\gamma_{C,2}^3}+...)$$

On décompose l'accélération :

• en une première partie utile à basse fréquence ;

• en une seconde partie due aux vibrations à la fréquence de résonance du mode masse-ressort. On obtient respectivement sur les voies 1 et 2 :

$$a = a_0 + \alpha_{V,1} \cos(2\pi f_R t)$$

$$a = a_0 + \alpha_{V,2} \cos(2\pi f_R t)$$

On peut estimer l'accélération grâce à un traitement différentiel. On ne s'intéresse qu'aux termes basse fréquence de la différence des fréquences. On aboutit à la relation ci-dessous :

$$\frac{f_1 - \dfrac{f_{0,1}}{f_{0,2}} f_2}{f_{0,1}} = a_0 \left( \frac{1}{2\gamma_{C,1}} + \frac{1}{2\gamma_{C,2}} \right) + \frac{a_0^2 + \dfrac{\alpha_{V,2}^2}{2}}{8\gamma_{C,2}^2} - \frac{a_0^2 + \dfrac{\alpha_{V,1}^2}{2}}{8\gamma_{C,1}^2} + \frac{a_0^3 + 3a_0 \dfrac{\alpha_{V,1}^2}{2}}{16\gamma_{C,1}^3} + \frac{a_0^3 + 3a_0 \dfrac{\alpha_{V,2}^2}{2}}{16\gamma_{C,2}^3}$$

Cette relation montre que :

- le terme d'ordre 3 du développement limité n'étant pas éliminé par le traitement différentiel, il provoque une erreur de non linéarité correspondant au terme en $a_0^3$ et une erreur de facteur d'échelle correspondant au terme en $a_0 \alpha_V^2$. L'amplitude des vibrations étant inconnue, cette erreur de facteur d'échelle ne peut pas être compensée.
- Le terme d'ordre 2 n'est qu'en partie réduit par le traitement différentiel. On a donc également une erreur de non linéarité correspondant au terme en $a_0^2$ et une erreur de biais correspondant au terme en $\alpha_V^2$. Là encore, cette erreur de biais ne peut pas être compensée.

Une autre méthode consiste à déterminer l'accélération à partir de la différence du carré des fréquences. Cette méthode est décrite dans le brevet français de référence FR 2 590 991. La fréquence du signal de sortie du capteur est supposée reliée à l'accélération par les relations suivantes, avec les mêmes notations que précédemment :
Pour la voie 1

$$f_{I,1} \approx f_{0,1} \sqrt{1 + \frac{a_0 + \alpha_{V,1} \cos(2\pi f_R t)}{\gamma_{C,1}}}$$

et pour la voie 2

$$f_{I,2} \approx f_{0,2} \sqrt{1 - \frac{a_0 + \alpha_{V,2} \cos(2\pi f_R t)}{\gamma_{C,2}}}$$

On modélise le dispositif qui permet d'extraire les fréquences sous la forme d'une fonction de transfert ayant un gain unité et un déphasage nul pour les basses fréquences, un gain $\beta$ et un déphasage $\phi$ pour la fréquence $f_R$ et un gain nul pour les fréquences multiples de $f_R$. Ce dispositif peut être, par exemple, une PLL, acronyme de Phase-Locked Loop, ce qui signifie boucle à verrouillage de phase.

On a alors en effectuant un développement limité d'ordre 3 :

$$\frac{f_{i,1}}{f_{0,1}} = 1 + \frac{a_0 + \alpha_{V,1} \cos(2\pi f_R t)}{2\gamma_{C,1}} - \frac{a_0^2 + \alpha_{V,1}^2 \cos^2(2\pi f_R t) + 2a_0 \alpha_{V,1} \cos(2\pi f_R t)}{8\gamma_{C,1}^2} +$$

$$\frac{1}{16\gamma_{C,1}^3} [a_0^3 + \alpha_{V,1}^3 \cos^3(2\pi f_R t) + 3a_0 \alpha_{V,1}^2 \cos^2(2\pi f_R t) + 3a_0^2 \alpha_{V,1} \cos(2\pi f_R t)]$$

et

$$\frac{f_{i,2}}{f_{0,2}} = 1 - \frac{a_0 + \alpha_{V,2}\cos(2\pi f_R t)}{2\gamma_{C,2}} - \frac{a_0^2 + \alpha_{V,2}^2\cos^2(2\pi f_R t) + 2a_0\alpha_{V,2}\cos(2\pi f_R t)}{8\gamma_{C,2}^2} - \frac{1}{16\gamma_{C,2}^3}[a_0^3 + \alpha_{V,2}^3\cos^3(2\pi f_R t) + 3a_0\alpha_{V,2}^2\cos^2(2\pi f_R t) + 3a_0^2\alpha_{V,2}\cos(2\pi f_R t)]$$

En sortie du dispositif d'estimation de fréquence, on a, d'après les hypothèses précédentes :

$$\frac{f_{S,1}}{f_{0,1}} = 1 + \frac{a_0 + \beta\alpha_{V,1}\cos(2\pi f_R t + \phi)}{2\gamma_{C,1}} - \frac{a_0^2 + \alpha_{V,1}^2/2 + 2a_0\alpha_{V,1}\beta\cos(2\pi f_R t + \phi)}{8\gamma_{C,1}^2} + \frac{1}{16\gamma_{C,1}^3}[a_0^3 + \alpha_{V,1}^3\frac{3}{4}\beta\cos(2\pi f_R t + \phi) + 3a_0\frac{\alpha_{V,1}^2}{2} + 3a_0^2\alpha_{V,1}\beta\cos(2\pi f_R t + \phi)]$$

et

$$\frac{f_{S,2}}{f_{0,2}} = 1 - \frac{a_0 + \beta a_{V,2}\cos(2\pi f_R t + \phi)}{2\gamma_{C,2}} - \frac{a_0^2 + \alpha_{V,2}^2/2 + 2a_0\alpha_{V,2}\beta\cos(2\pi f_R t + \phi)}{8\gamma_{C,2}^2} - \frac{1}{16\gamma_{C,2}^3}[a_0^3 + \alpha_{V,2}^3\frac{3}{4}\beta\cos(2\pi f_R t + \phi) + 3a_0\frac{\alpha_{V,2}^2}{2} + 3a_0^2\alpha_{V,2}\beta\cos(2\pi f_R t + \phi)]$$

On élève ces deux fréquences au carré et on garde les termes basse fréquence.

$$f_{S,1}^2 = f_{0,1}^2[1 + \frac{a_0}{\gamma_{C,1}} + \frac{\alpha_{V,1}^2}{8\gamma_{C,1}^2}(\beta^2 - 1) + \frac{a_0\alpha_{V,1}^2}{8\gamma_{C,1}^3}(1 - \beta^2)]$$

et

$$f_{S,2}^2 = f_{0,2}^2[1 - \frac{a_0}{\gamma_{C,2}} + \frac{\alpha_{V,2}^2}{8\gamma_{C,2}^2}(\beta^2 - 1) - \frac{a_0\alpha_{V,2}^2}{8\gamma_{C,2}^3}(1 - \beta^2)]$$

En effectuant le traitement différentiel, on obtient :

$$\frac{f_{S,1}^2 - \frac{f_{0,1}^2}{f_{0,2}^2}f_{S,2}^2}{f_{0,1}^2} = a_0(\frac{1}{\gamma_{C,1}} + \frac{1}{\gamma_{C,2}}) + \frac{(\beta^2 - 1)}{8}(\frac{\alpha_{V,1}^2}{\gamma_{C,1}^2} - \frac{\alpha_{V,2}^2}{\gamma_{C,2}^2}) + \frac{a_0(1 - \beta^2)}{8}(\frac{\alpha_{V,1}^2}{\gamma_{C,1}^3} + \frac{\alpha_{V,2}^2}{\gamma_{C,2}^3})$$

Si le capteur est soumis à des vibrations et si le dispositif de calcul des fréquences n'assure pas une démodulation large bande, c'est-à-dire si β est différent de 1, on retrouve, de nouveau, une erreur de facteur d'échelle et une erreur de biais qui ne peut pas être complètement éliminée par le traitement différentiel. Ces erreurs ne sont pas compensables.

Le système selon l'invention ne présente pas les inconvénients précédents. On sait que le spectre du signal de sortie est centré sur la fréquence $f_{a0}$ égale à la somme de la fréquence centrale du résonateur et d'un écart dû à l'accélération basse fréquence $a_0$ appliquée au capteur. Ce spectre comporte des raies situées aux fréquences $f_{a0} \pm$ $k.f_R$ dues aux vibrations. Le système selon l'invention met en oeuvre un algorithme réalisant une démodulation large bande du signal de sortie du capteur, prenant en compte les raies d'amplitude significative. L'algorithme se base sur des relations théoriques rigoureuses entre la variation de raideur induite par l'accélération et les paramètres caractéristiques du signal de sortie du capteur qui sont l'amplitude instantanée et la fréquence instantanée. Théoriquement, le spectre du signal de sortie contient des raies à des fréquences inférieures à $f_R$. En pratique, étant donnés les fréquences et les indices de modulation mis en jeu, ces raies sont d'amplitudes négligeables. On peut donc considérer que le signal a un support spectral disjoint des termes de vibration qui sont de plus basse fréquence que lui. A cause de ces raies, le spectre du signal s'étend sur une large bande. Il faut que la fréquence d'échantillonnage soit suffisamment élevée pour contenir le spectre du signal. Par exemple, avec les indices de modulation et les fréquences mises en jeu pour les accéléromètres au niveau de la fréquence de résonance au repos et des vibrations, l'ordre de grandeur de la fréquence d'échantillonnage doit être de 250 kHz.

Plus précisément, l'invention, selon la revendication 1, a pour objet un système d'analyse de la fréquence d'oscillation d'un dispositif vibrant selon un axe, ledit dispositif vibrant comprenant une masse reliée à deux poutres identiques (1) et parallèles formant diapason, chaque poutre portant deux électrodes (2,3), la première électrode (2) servant à l'excitation et la seconde électrode (3) à la détection, ledit système comportant des moyens de mesure de la position A du dispositif selon cet axe à partir des mesures du courant délivré par les électrodes de détection, le signal issu desdits moyens représentatif de la position A étant représenté par une fonction U dépendant du temps, caractérisé en ce que ledit système comporte des premiers moyens permettant de calculer la fonction $\omega_1^2 - \dfrac{\rho_1^{(2)}}{\rho_1}$ , $\omega_1$ étant la pulsation instantanée de U, $\rho_1$ son amplitude instantanée et $\rho_1^{(2)}$ la dérivée seconde de ladite amplitude instantanée,

la fonction $\omega_1^2 - \dfrac{\rho_1^{(2)}}{\rho_1}$ étant représentative du carré de la pulsation de résonance $\Omega$ du dispositif vibrant.

Lesdits premiers moyens comprennent des moyens de calcul de la dérivée seconde de la fonction U notée $U^{(2)}$, de la transformée de Hilbert de la fonction U notée V, de la dérivée seconde de cette transformée de Hilbert notée

$V^{(2)}$ ainsi que d'une première fonction égale à $-\dfrac{U.U^{(2)} + V.V^{(2)}}{U^2 + V^2}$ mathématiquement égale à $\omega_1^2 - \dfrac{\rho_1^{(2)}}{\rho_1}$ , représentative du carré de la pulsation de résonance $\Omega$ du dispositif vibrant.

Avantageusement, lorsque l'équation différentielle représentative des variations de position A du dispositif comporte des termes de non-linéarité d'ordre 3, ledit dispositif comporte alors des seconds moyens permettant de réaliser, en utilisant les notations précédentes, une seconde fonction égale à

$-\dfrac{V^{(2)}V + U^{(2)}U}{U^2 + V^2} - \beta_i [\dfrac{3}{4K_1^2}(U^2 + V^2)]$ , représentative du carré de la pulsation de résonance $\Omega$ du dispositif vibrant, $\beta_i$ et $K_1$ étant des constantes.

Avantageusement, lorsque le dispositif vibrant est à oscillations forcées, c'est-à-dire que le dispositif comporte un asservissement en phase et en amplitude disposé de façon à éliminer l'amortissement naturel du dispositif, ledit asservissement générant une polarisation $V_0$, ledit dispositif comporte alors des troisièmes moyens permettant de réaliser, en utilisant les notations précédentes, une troisième fonction égale à

$-\dfrac{V^{(2)}V + U^{(2)}U}{U^2 + V^2} - \beta_i \left[\dfrac{3}{4K_1^2}(U^2 + V^2) + 3\left(\dfrac{K_3 V_0^2}{-\dfrac{U\,U^{(2)} + V\,V^{(2)}}{U^2 + V^2}}\right)^2\right]$ , représentative du carré de la pulsation de résonance $\Omega$ du dispositif vibrant, $\beta_i$, $K_1$ et $K_3$ étant des constantes.

Avantageusement, le carré de la pulsation de résonance est lié à un paramètre a à mesurer par la relation :

$\Omega^2 = \omega_0^2(1 + \dfrac{a}{\gamma_C})$ $\gamma_C$ étant une constante, $\omega_0$ étant la pulsation initiale en l'absence dudit paramètre.

Avantageusement, le dispositif vibrant comprend deux moyens de vibration identiques, chacun des moyens étant relié au système d'analyse, ledit système comportant :

- des moyens de mesure aptes à calculer d'une part, ou une première fonction ou une deuxième fonction ou une troisième fonction représentative du carré de la pulsation de résonance $\Omega_1$ du premier moyen de vibration et d'autre part ou une première fonction ou une deuxième fonction ou une troisième fonction représentative du carré de la pulsation de résonance $\Omega_2$ du second moyen de vibration ;

- des moyens de calcul des fonctions suivantes : $\Omega_1^2 - \dfrac{\omega_{01}^2}{\omega_{02}^2}\Omega_2^2$ et $\Omega_1^2 + \dfrac{\omega_{0,1}^2}{\omega_{0,2}^2}\dfrac{\gamma_{C,2}}{\gamma_{C,1}}\Omega_2^2$ en utilisant les mêmes notations que précédemment, les indices représentant le premier ou le second moyen de vibration.

Avantageusement, le système d'analyse est un système électronique, la fonction U étant un paramètre électrique, ledit système comportant des moyens de numérisation et d'échantillonnage de la fonction U, des premiers filtres à réponse impulsionnelle finie aptes à réaliser la transformée de Hilbert d'une fonction électronique, des seconds filtres à réponse impulsionnelle finie aptes à réaliser la dérivée d'une fonction électrique, des lignes à retard permettant de synchroniser les différents signaux échantillonnés, des moyens électroniques réalisant les fonctions de sommations, de multiplication et de division et des filtres coupe-bande et des filtres passe-bas.

L'invention sera mieux comprise et d'autres avantages apparaîtront à la lecture de la description qui va suivre donnée à titre non limitatif et grâce aux figures annexées parmi lesquelles :

La figure 1 représente le schéma de principe d'un oscillateur à poutres vibrantes ;
La figure 2 représente le synoptique de calcul selon l'invention du carré des pulsations du système ;

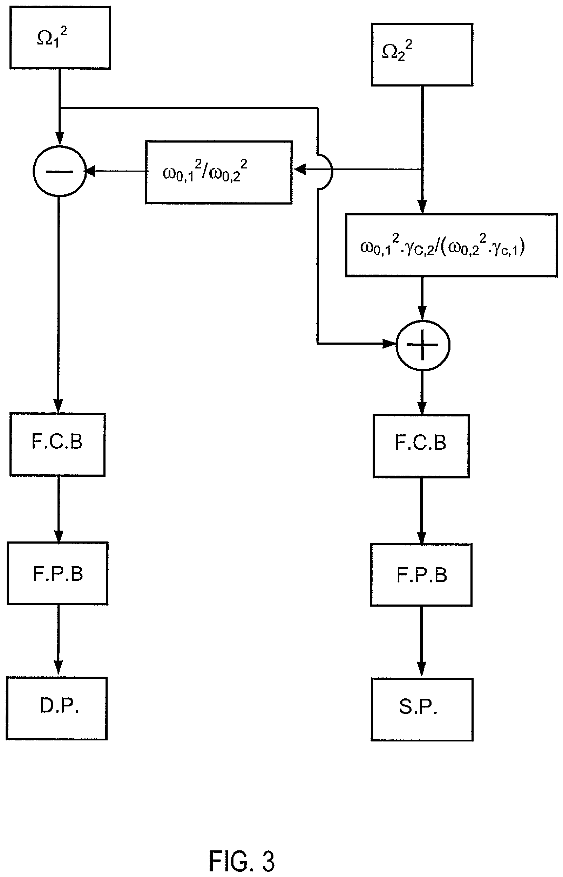

La figure 3 représente le synoptique de calcul des paramètres à mesurer en traitement différentiel.

Comme il a été dit, le cœur de l'invention repose sur un algorithme réalisant une démodulation large bande du signal de sortie du capteur. Cet algorithme met en œuvre les transformées de Hilbert et leurs propriétés.

Soit $x(t)$ un signal réel, la transformée de Hilbert $\hat{x}(t)$ de $x(t)$ est définie par :

$$\hat{x}(t) = \frac{1}{\pi}\int \frac{x(u)}{t-u}du = \frac{1}{\pi}\lim_{H\to 0}\left(\int_{-\infty}^{t-H}\frac{x(u)}{t-u}du + \int_{t+H}^{\infty}\frac{x(u)}{t-u}du\right)$$

Du point de vue fréquentiel, si on note $X(f)$ et $\hat{X}(f)$ les transformées de Fourier respectives de $x(t)$ et $\hat{x}(t)$, on a :

$$\hat{X}(f) = -j\,\mathrm{sgn}(f)X(f)$$

avec $\mathrm{sgn}(f) = +1$ pour $f > 0$ $\mathrm{sgn}(f) = -1$ pour $f < 0$ et $\mathrm{sgn}(f) = 0$ pour $f = 0$

On définit le signal analytique $z_x(t)$ par $z_x(t) = x(t) + j\,\hat{x}(t)$. Sa transformée de Fourier vaut donc, compte-tenu de ce qui précède :

$$Z_x(f) = 2X(f)\ \text{si}\ f > 0,$$

$$Z_x(f) = 0\ \text{si}\ f < 0$$

Le spectre n'étant pas symétrique, le signal $z_x(t)$ est complexe. On pose $z_x(t) = \rho(t)e^{j\varphi(t)}$. $\rho(t)$ est l'amplitude instantanée du signal $x$, $\varphi(t)$ est la phase instantanée du signal $x$ On a alors

$$x(t) = \rho(t)\cos(\varphi(t))\ \ et\ \hat{x}(t) = \rho(t)\sin(\varphi(t))$$

On a également $\rho^2 = x^2 + \hat{x}^2$

On définit $\omega(t) = \dfrac{d\varphi}{dt}$, pulsation instantanée du signal $x$

On utilise dans la suite de la description les trois propriétés suivantes de la transformée de Hilbert :

- Lorsqu'on a deux signaux $x$ et $y$ de support spectraux disjoints, avec $x$ de plus basse fréquence que $y$, la transformée de Hilbert du produit $xy$ vérifie : $H(xy) = xH(y)$.
- Soit $x(t)$ un signal d'amplitude instantanée $\rho$ et de phase instantanée $\varphi$. On suppose que $\rho$ est de plus basse fréquence que $\cos(\varphi)$. La transformée de Hilbert de $x^2$ est alors $\dfrac{1}{2}\rho^2(t)\sin(2\varphi(t))$ et celle de $x^3$ est $\dfrac{1}{4}\rho^3[3\sin(\varphi) + \sin(3\varphi)]$
- Soit $I$ un signal et $Q$ sa transformée de Hilbert, $\omega$ étant la pulsation instantanée de $I$, $\rho$ étant l'amplitude instantanée de $I$. On a alors, en utilisant $I = \rho\cos(\varphi)$ et $Q = \rho\sin(\varphi)$, l'égalité suivante $-\dfrac{II^{(2)} + QQ^{(2)}}{I^2 + Q^2} = \omega^2 - \dfrac{\rho^{(2)}}{\rho}$

La position d'un premier oscillateur notée $A_1$ vérifie l'équation différentielle générale suivante, avec les mêmes notations que précédemment :

$$\text{Relation 2 :}\quad \frac{d^2A_1}{dt^2} + \frac{\omega_{0,1}}{Q_{R,1}}\frac{dA_1}{dt} + \omega_{0,1}^2(1 + \frac{a}{\gamma_{C,1}})A_1 + \beta_{i,1}A_1^3 = e_1(t)$$

Dans le cas où ce résonateur ne comporte pas de terme de non linéarité du troisième ordre et dans le cas où le terme d'excitation ne fait que compenser exactement le terme d'amortissement, alors la relation 2 se simplifie et devient la relation 2bis :

$$\frac{d^2A_1}{dt^2} + \omega_{0,1}^2(1 + \frac{a}{\gamma_{C,1}})A_1 = 0$$

que l'on peut encore noter :

$$\frac{d^2A_1}{dt^2} + \Omega_{0,1}^2.A_1 = 0$$

On peut poser $a = a_0 + \alpha_v\cos(2\pi f_R t)$ $a_0$ représentant la partie utile basse fréquence de l'accélération appliquée au capteur et $\alpha_v$ étant une constante représentant l'amplitude des vibrations.

On pose $I = A_1$ et on note $Q$ la transformée de Hilbert de I. Le spectre de I est celui d'un signal modulé en fréquence par un sinus. On a donc une raie principale centrée sur la fréquence $f_{a0,1} = \dfrac{\omega_{0,1}}{2\pi}\sqrt{1 + \dfrac{a_0}{\gamma_{C,1}}}$ et des raies secondaires à $f_{a0,1} \pm kf_R$.

En appliquant la transformée de Hilbert à la relation 2bis, on obtient alors :

$$\frac{d^2Q}{dt^2} + \omega_{0,1}^2(1 + \frac{a}{\gamma_{C,1}})Q = 0$$

En posant $I = \rho\cos(\varphi)$ et $Q = \rho\sin(\varphi)$, avec $p$ amplitude instantanée de $I$ et $\varphi$ phase instantanée de $I$, dans les deux équations différentielles précédentes, on obtient les deux équations suivantes

$$\rho^{(2)}\cos(\varphi) - 2\rho^{(1)}\omega\sin(\varphi) - \rho[\omega^{(1)}\sin(\varphi) + \omega^2\cos(\varphi)] = -\omega_{0,1}^2(1+\frac{a}{\gamma_{C,1}})\rho\cos(\varphi)$$

$$\rho^{(2)}\sin(\varphi) + 2\rho^{(1)}\omega\cos(\varphi) + \rho[\omega^{(1)}\cos(\varphi) - \omega^2\sin(\varphi)] = -\omega_{0,1}^2(1+\frac{a}{\gamma_{C,1}})\rho\sin(\varphi)$$

On utilise, dans cette formulation et dans celles qui suivent, la notation simplifiée des dérivées qui consiste à indiquer l'ordre de dérivation par un exposant entre parenthèses. En multipliant la première relation par $\cos(\varphi)$ et la seconde par $\sin(\varphi)$, en effectuant une somme et en divisant par $\rho$, l'amplitude instantanée ne s'annulant pas, on obtient :

$$\omega_{0,1}^2(1+\frac{a}{\gamma_{C,1}}) = \omega^2 - \frac{\rho^{(2)}}{\rho}$$

Dans le cas d'un accéléromètre à barreau vibrant, la tension de sortie $U_1$, de l'amplificateur de charge est proportionnelle au signal $I$. Le spectre du signal de position de l'oscillateur ne comprend alors pas de terme basse fréquence. En notant $\omega_1$ la pulsation instantanée de $U_1$, et $\rho_1$ son amplitude instantanée, on a

$$\omega_1 = \omega \text{ et } \frac{\rho_1^{(2)}}{\rho_1} = \frac{\rho^{(2)}}{\rho} \quad .$$

On obtient ainsi

$$\text{Relation 6} \quad \omega_{0,1}^2(1+\frac{a}{\gamma_{C,1}}) = \omega_1^2 - \frac{\rho_1^{(2)}}{\rho_1}$$

A partir de la fonction $\omega_1^2 - \dfrac{\rho_1^{(2)}}{\rho_1}$ , des valeurs $\omega_{0,1}$ et $\gamma_{c,1}$ situées dans le premier membre, il est alors facile de déterminer a qui est le paramètre recherché.

En notant $V_1$ la transformée de Hilbert de $U_1$, et en utilisant la troisième propriété de la transformée de Hilbert on a alors :

$$\text{Relation 7} \quad \omega_{0,1}^2(1+\frac{a}{\gamma_{C,1}}) = \omega_1^2 - \frac{\rho_1^{(2)}}{\rho_1} = -\frac{U_1 U_1^{(2)} + V_1 V_1^{(2)}}{U_1^2 + V_1^2}$$

La fonction $\omega_1^2 - \dfrac{\rho_1^{(2)}}{\rho_1}$ et donc le terme a peut ainsi être calculé grâce à la fonction $-\dfrac{U_1 U_1^{(2)} + V_1 V_1^{(2)}}{U_1^2 + V_1^2}$ .

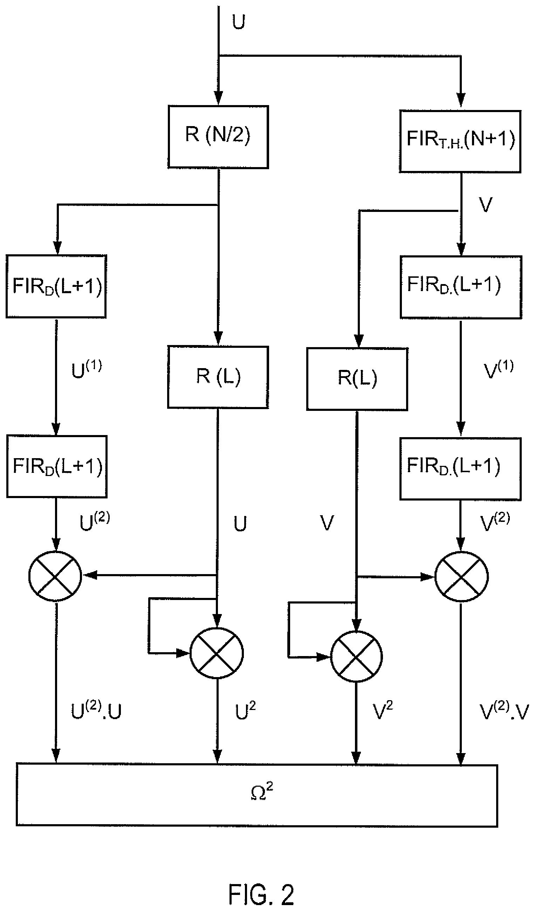

La réalisation pratique de cette fonction $-\dfrac{U_1 U_1^{(2)} + V_1 V_1^{(2)}}{U_1^2 + V_1^2}$ ne pose pas de problèmes techniques particuliers et est représentée, à titre d'exemple, sur le synoptique de la figure 2.

Sur cette figure, chaque rectangle représente un élément électronique assurant une fonction particulière. Ainsi, la transformée de Hilbert $V_1$ est obtenue grâce à un filtre à réponse impulsionnelle finie noté $FIR_{TH}$ à N+1 points dont la bande spectrale inclut les raies d'amplitude significative du signal $U_1$. Les dérivées des signaux sont calculées par un filtre à réponse impulsionnelle finie noté $FIR_D$ à L+1 points dont la bande spectrale inclut également ces raies. Afin d'assurer la synchronisation des signaux, le signal $U_1$ doit être retardé de $\dfrac{N}{2}$ points pour être synchronisé avec le signal $V_1$ par des lignes à retard notées R(N/2). Ensuite les signaux $U_1$ et $V_1$ doivent être retardés par d'autres lignes à retard notées R(L) de L points pour être synchrones avec $U_1^{(2)}$ et $V_1^{(2)}$.

On réalise ainsi une démodulation large bande du signal. La relation $-\dfrac{II^{(2)} + QQ^{(2)}}{I^2 + Q^2} = \omega^2 - \dfrac{\rho^{(2)}}{\rho}$ est toujours vraie quelque soit $I$. L'emploi de l'algorithme utilisant la dérivée seconde et la transformée de Hilbert avec des filtres ayant une bande passante suffisamment importante permet d'effectuer une démodulation large bande du signal. L'utilisation de cet algorithme est applicable à tout système dynamique dont le comportement est régi par une loi du type de la relation 0. L'application de cet algorithme à l'accéléromètre VBA sans non linéarité d'ordre 3 permet d'obtenir une information de l'accélération instantanée avec la composante utile et les vibrations. La composante utile peut en être extraite par filtrage passe-bas.

Il est à noter qu'en remplaçant $I$ par $\rho\cos(\varphi)$ et $Q$ par $\rho\sin(\varphi)$ dans leurs équations différentielles respectives, on obtient $2\rho'\omega + \rho\omega' = 0$ soit $\omega\rho^2$ = constante. Toute variation de pulsation instantanée provoquée par une variation de l'accélération appliquée au capteur entraîne une variation d'amplitude instantanée. On démontre ainsi que le signal du capteur n'est pas modulé seulement en fréquence mais aussi en amplitude. Cette modulation d'amplitude n'est pas prise en compte dans les méthodes de l'art antérieur, ce qui engendre donc une erreur supplémentaire.

On considère maintenant l'équation différentielle complète vérifiée par le résonateur :

$$\frac{d^2 A_1}{dt^2} + \frac{\omega_{0,1}}{Q_{R,1}}\frac{dA_1}{dt} + \omega_{0,1}^2\left(1 + \frac{a}{\gamma_{C,1}}\right)A_1 + \beta_{i,1}A_1^3 = e_1(t)$$

Le terme d'excitation $e_1$ s'écrit $e_1 = K_{4,1}(V_0 + v)^2 + K_{5,1}V_0^2$ Avec $V_0$ : tension continue de polarisation et $v$ : tension variable obtenue à partir d'un asservissement en phase et en amplitude sur la tension de sortie de l'amplificateur de charge représentant le signal de sortie du capteur. La tension $v$ se situe donc à la fréquence du résonateur.

On suppose que l'asservissement en phase et en amplitude se fait parfaitement. On peut éliminer le terme d'amortissement. On a en effet : $\dfrac{\omega_{0,1}}{Q_{R,1}}\dfrac{dA_1}{dt} = 2K_{4,1}V_0 v$

Le terme $v^2$ possède une composante à deux fois la fréquence de résonance qui n'intervient pas significativement dans l'équation et un terme continu négligeable par rapport au carré de la tension continue de polarisation.

L'équation devient ainsi :

Relation 8    $\dfrac{d^2 A_1}{dt^2} + \omega_{0,1}^2\left(1 + \dfrac{a}{\gamma_{C,1}}\right)A_1 + \beta_{i,1}A_1^3 = K_{3,1}V_0^2$ avec $K_{3,1} = K_{5,1} + K_{4,1}$

On cherche à décomposer la solution du mouvement sous la forme $A_1 = I + \Delta$ Avec $I$ signal haute fréquence dont le spectre est centré sur $f_{a0,1} = \dfrac{\omega_{0,1}}{2\pi}\sqrt{1 + \dfrac{a_0}{\gamma_{C,1}}}$ avec des raies à $f_{a0,1} \pm kf_R$ et

$\Delta$ terme basse fréquence.

$$\Delta = \frac{K_{3,1}V_0^2}{\omega_{0,1}^2\left(1 + \dfrac{a}{\gamma_{C,1}}\right)}$$

On raisonne dans un premier temps en l'absence de non linéarité d'ordre 3. On pose alors .

On considère la solution $I$ de l'équation $\dfrac{d^2 I}{dt^2} + \omega_{0,1}^2 (1 + \dfrac{a}{\gamma_{C,1}}) I = 0$ . $I$ est un signal haute fréquence dont le spectre est centré sur $f_{a0,1}$. $\Delta$ est un signal basse fréquence. Il comporte des raies à $f_R$, $2f_R$ ... dues à la présence des vibrations dans a, mais ces raies sont d'amplitude négligeables. On a donc $\dfrac{d^2(I+\Delta)}{dt^2} \approx \dfrac{d^2 I}{dt^2}$

En l'absence de non linéarité d'ordre 3, on décompose donc la solution de l'équation (8) en un terme haute fréquence et un terme basse fréquence $\Delta$ défini par

$$\Delta = \dfrac{K_{3,1} V_0^2}{\omega_{0,1}^2 (1 + \dfrac{a}{\gamma_{C,1}})}$$

On néglige l'effet de la non linéarité sur ce terme basse fréquence. En effet, d'après les ordres de grandeur mis en jeu, on a

$$\omega_{0,1}^2 (1 + \dfrac{a}{\gamma_{C,1}}) \gg \beta_{i,1}(I+\Delta)^2 .$$

$$\Delta = \dfrac{K_{3,1} V_0^2}{\omega_{0,1}^2 (1 + \dfrac{a}{\gamma_{C,1}})}$$

On écrit donc $A_1 = I + \Delta$ avec $I$ terme haute fréquence et $\Delta$ terme basse fréquence défini par . L'équation 8 s'écrit :

Relation 8bis $\qquad \dfrac{d^2(I+\Delta)}{dt^2} + \omega_{0,1}^2 (1 + \dfrac{a}{\gamma_{C,1}})(I+\Delta) + \beta_{i,1}(I+\Delta)^3 = K_{3,1} V_0^2$

En appliquant la transformée de Hilbert à la relation 8 bis avec les mêmes notations que précédemment, on obtient, en notant $H(a\Delta)$ la transformée de Hilbert de $a\Delta$, la relation 9 ci-dessous :

Relation 9: $\dfrac{d^2 Q}{dt^2} + \omega_{0,1}^2 (1 + \dfrac{a}{\gamma_{C,1}})Q + \omega_{0,1}^2 \dfrac{H(a\Delta)}{\gamma_{C,1}} + \beta_{i,1}(\dfrac{Q^3}{2} + \dfrac{3}{2}I^2 Q + 3\Delta IQ + 3\Delta^2 Q) = 0$

En multipliant la relation 8 bis par $I$ et la relation 9 par $Q$, on obtient :

$$\omega_{0,1}^2 (1 + \dfrac{a}{\gamma_{C,1}}) = -\dfrac{Q^{(2)}Q + I^{(2)}I}{I^2 + Q^2} - \dfrac{\omega_{0,1}^2 H(a\Delta)Q}{\gamma_{C,1}(I^2+Q^2)} - \beta_{i,1}[\dfrac{Q^2}{2} + I^2 + 3\Delta I + 3\Delta^2 + \Delta^3 \dfrac{I}{I^2+Q^2}] + \dfrac{K_{3,1}V_0^2 I}{I^2+Q^2}$$

$$-\omega_{0,1}^2 (1 + \dfrac{a}{\gamma_{C,1}})\dfrac{\Delta I}{I^2 + Q^2}$$

Dans le membre de droite de l'équation, les termes $H(a\Delta)$ et $a\Delta$ sont inconnus. On ne les prend pas en compte dans l'algorithme dans la mesure où ils provoquent une erreur négligeable.

Les termes en $\Delta I$, $\Delta^3 I$ et $K_{3,1} V_0^2 I$ sont des termes haute fréquence. Si on les prenait en compte dans l'algorithme, ils seraient de toute manière éliminés par le filtre passe-bas mis à la fin du traitement pour isoler la partie utile de l'accélération se trouvant dans les basses fréquences. On a la relation suivante $I^2 + \dfrac{Q^2}{2} = \dfrac{3}{4}\rho^2 + \dfrac{\rho^2}{4}\cos(2\varphi)$ .

Le terme $\rho^2 \cos(2\varphi)$ ne se trouve pas non plus dans la bande de fréquence utile.

Compte-tenu de ces simplifications, on obtient alors la relation suivante :

$$\omega_{0,1}^2(1+\frac{\hat{a}}{\gamma_{C,1}}) = -\frac{Q^{(2)}Q + I^{(2)}I}{I^2 + Q^2} - \beta_{i,1}[\frac{3}{4}\rho^2 + 3\Delta^2]$$

$\hat{a}$ est l'accélération estimée par l'algorithme. Elle comprend l'accélération utile basse fréquence et les termes de vibration.

$$-\frac{I^{(2)}I + Q^{(2)}Q}{I^2 + Q^2}\Delta = K_{3,1}V_0^2$$

On estime $\Delta$ par la relation

La tension de sortie $U_1$, de l'amplificateur de charge est proportionnelle au signal $I$. $U_1 = K_1 I$ . L'information $\Delta$ ayant un spectre basse fréquence n'est pas présente en sortie de l'amplificateur de charge. On obtient ainsi la relation 10

$$\Omega_1^2 = -\frac{V_1^{(2)}V_1 + U_1^{(2)}U_1}{U_1^2 + V_1^2} - \beta_{i,1}[\frac{3}{4K_1^2}(U_1^2 + V_1^2) + 3\left(\frac{K_{3,1}V_0^2}{-\frac{U_1 U_1^{(2)} + V_1 V_1^{(2)}}{U_1^2 + V_1^2}}\right)^2]$$

On peut réécrire la relation, en utilisant la troisième propriété de la transformée de Hilbert, en notant $\omega_1$ la pulsation instantanée de $U_1$ et $\rho_1$ l'amplitude instantanée de $U_1$. On obtient alors la relation 11

$$\Omega_1^2 = \omega_1^2 - \frac{\rho_1^{(2)}}{\rho_1} - \beta_{i,1}[\frac{3}{4K_1^2}\rho_1^2 + 3\left(\frac{K_{3,1}V_0^2}{\omega_1^2 - \frac{\rho_1^{(2)}}{\rho_1}}\right)^2]$$

$$\omega_{0,1}^2(1+\frac{\hat{a}}{\gamma_{C,1}}) = \Omega_1^2$$

L'accélération estimée s'obtient à partir de cette information par la relation 12 Relation 12

On peut ainsi estimer l'accélération grâce à la fonction

$$\omega_1^2 - \frac{\rho_1^{(2)}}{\rho_1} - \beta_{i,1}[\frac{3}{4K_1^2}\rho_1^2 + 3\left(\frac{K_{3,1}V_0^2}{\omega_1^2 - \frac{\rho_1^{(2)}}{\rho_1}}\right)^2]$$

Cette fonction peut être calculée par la réalisation de la fonction

$$-\frac{V_1^{(2)}V_1 + U_1^{(2)}U_1}{U_1^2 + V_1^2} - \beta_{i,1}[\frac{3}{4K_1^2}(U_1^2 + V_1^2) + 3\left(\frac{K_{3,1}V_0^2}{-\frac{U_1 U_1^{(2)} + V_1 V_1^{(2)}}{U_1^2 + V_1^2}}\right)^2]$$

L'accélération estimée par cet algorithme ne contient pas de biais significatif introduit par les vibrations. L'information renvoyée par l'algorithme varie linéairement en fonction de l'accélération appliquée au capteur.

Par rapport à l'algorithme précédent, on voit apparaître deux termes supplémentaires :

- $-\dfrac{3}{4K_1^2}\beta_{i,1}(U_1^2 + V_1^2)$    terme correctif de la non linéarité d'ordre 3.

- $-\beta_{i,1}3\left(\dfrac{K_{3,1}V_0^2}{-\dfrac{U_1U_1^{(2)} + V_1V_1^{(2)}}{U_1^2 + V_1^2}}\right)^2$    terme correctif de la tension continue de polarisation

Généralement, on emploie deux résonateurs ayant des axes sensibles de même direction et de sens opposé, sur deux voies différentes. On a, dans ce cas, sur chacune des voies des relations similaires liant $\Omega$ aux autres paramètres. Sur la voie 1, on a la relation 12 précédente et sur la voie 2 la relation 13 ci-dessous, en notant $\omega_2$ pulsation instantanée de $U_2$ et $\rho_2$ amplitude instantanée de $U_2$, $U_2$ étant la tension en sortie du filtre sur la deuxième voie

$$\Omega_2^2 = \omega_2^2 - \frac{\rho_2^{(2)}}{\rho_2} - \beta_{i,2}\left[\frac{3}{4K_2^2}\rho_2^2 + 3\left(\frac{K_{3,2}V_0^2}{\omega_2^2 - \frac{\rho_2^{(2)}}{\rho_2}}\right)^2\right]$$

En utilisant la troisième propriété de la transformée de Hilbert, on montre que le terme de droite de la relation précédente peut être réalisé en utilisant $U_2$, sa transformée de Hilbert notée $V_2$ et leurs dérivées. On obtient alors la relation suivante :

$$\Omega_2^2 = -\frac{V_2^{(2)}V_2 + U_2^{(2)}U_2}{U_2^2 + V_2^2} - \beta_{i,2}\left[\frac{3}{4K_2^2}(U_2^2 + V_2^2) + 3\left(\frac{K_{3,2}V_0^2}{-\frac{U_2U_2^{(2)} + V_2V_2^{(2)}}{U_2^2 + V_2^2}}\right)^2\right]$$

On peut montrer de la même manière que l'accélération peut être estimée sur cette voie grâce à la relation :

$$Relation\ 15 \quad \omega_{0,2}^2\left(1 - \frac{\hat{a}}{\gamma_{C,2}}\right) = \Omega_2^2$$

Partant de ces deux relations, il est possible d'effectuer un traitement différentiel, c'est à dire un traitement qui utilise les informations des deux voies du capteur et qui détermine à partir des informations renvoyées par chaque voie non seulement l'information d'accélération mais encore les dérives des principaux paramètres dues notamment à la température.

On peut utiliser la simple différence des deux informations, l'accélération pouvant être estimée grâce à la relation

$$\left(\frac{\omega_{0,1}^2}{\gamma_{C,1}} + \frac{\omega_{0,2}^2}{\gamma_{C,2}}\right)\hat{a} = \Omega_1^2 - \Omega_2^2 - (\omega_{0,1}^2 - \omega_{0,2}^2)$$

Cependant, si les termes en $\omega_0$ et en $\gamma_c$ dérivent et sont fonction d'un paramètre comme la température, alors une mauvaise estimation de ladite température provoque alors :

- une erreur de biais par mauvaise estimation du terme $\omega_{0,1}^2 - \omega_{0,2}^2$

- une erreur de facteur d'échelle par mauvaise estimation du terme $(\dfrac{\omega_{0,1}^2}{\gamma_{C,1}} + \dfrac{\omega_{0,2}^2}{\gamma_{C,2}})$ .

On peut notablement s'affranchir de ces difficultés en utilisant un traitement différentiel mieux adapté. On a vu que l'accélération était reliée aux informations renvoyées sur les deux voies par les relations 11 et 13. On estime les deux quantités suivantes :

- différence pondérée des deux informations $\Omega_1^2 - \dfrac{\omega_{0,1}^2}{\omega_{0,2}^2} \Omega_2^2$

- somme pondérée des deux informations $\Omega_1^2 + \dfrac{\omega_{0,1}^2}{\omega_{0,2}^2} \dfrac{\gamma_{C,2}}{\gamma_{C,1}} \Omega_2^2$

On a alors les relations suivantes:

$$\text{Relation 16} \quad \Omega_1^2 - \frac{\omega_{0,1}^2}{\omega_{0,2}^2} \Omega_2^2 = \omega_{0,1}^2 \left( \frac{1}{\gamma_{c,1}} + \frac{1}{\gamma_{C,2}} \right) \hat{a}$$

$$\text{Relation 17} \quad \Omega_1^2 + \frac{\omega_{0,1}^2}{\omega_{0,2}^2} \frac{\gamma_{C,2}}{\gamma_{C,1}} \Omega_2^2 = \omega_{0,1}^2 (1 + \frac{\gamma_{C,2}}{\gamma_{C,1}})$$

L'accélération estimée de la relation 16 comprend alors la partie utile et les termes de vibration.

En supposant que l'accélération critique et que la fréquence au repos varient suivant une loi exponentielle en fonction de la température, les rapports $\dfrac{\omega_{0,1}^2}{\omega_{0,2}^2} \dfrac{\gamma_{C,2}}{\gamma_{C,1}}$ et $\dfrac{\omega_{0,1}^2}{\omega_{0,2}^2}$ sont indépendants de la température et peuvent être également calibrés. La somme pondérée des deux informations ne dépend donc théoriquement que de la température et ne dépend pas de l'accélération. Grâce à la somme pondérée de $\Omega_1^2$ et de $\Omega_2^2$ de la relation 17, on peut ainsi estimer la température et ensuite déterminer l'accélération grâce à la relation 16. La différence pondérée permet ainsi de s'affranchir de l'erreur de biais due à une mauvaise estimation de la température.

On peut réécrire ces deux relations en exprimant les paramètres physiques comme des polynômes fonction de la température. On suppose que la somme pondérée dépend de la température et également de l'accélération. On obtient ainsi

$$(\alpha_0 + \alpha_1 T + \alpha_2 T^2) \hat{a} = \Omega_1^2 - \frac{\omega_{0,1}^2}{\omega_{0,2}^2} \Omega_2^2$$

$$\delta_0 + \delta_1 T + \delta_2 T^2 + \delta_3 \hat{a} + \delta_4 \hat{a} T = \Omega_1^2 + \frac{\omega_{0,1}^2}{\omega_{0,2}^2} \frac{\gamma_{C,2}}{\gamma_{C,1}} \Omega_2^2$$

Les coefficients $\alpha_i$ et $\delta_i$ sont connus par calibration. Des informations $\Omega_1^2$ et $\Omega_2^2$, on peut donc en déduire l'accélération utile et la température.

La réalisation pratique ne pose pas de problèmes particuliers. A titre d'exemple, le traitement différentiel est représenté sur la figure 4. On filtre la somme et la différence pondérée par un filtre coupe bande noté F.C.B. centré sur la fréquence des vibrations et par un filtre passe bas noté F.P.B. L'accélération estimée grâce à ces relations en sortie des filtres est alors uniquement l'accélération utile.

## Revendications

1.  Système d'analyse de la fréquence d'oscillation d'un dispositif vibrant selon un axe, ledit dispositif vibrant comprenant une masse reliée à deux poutres identiques (1) et parallèles formant diapason, chaque poutre portant deux électrodes (2, 3), la première électrode (2) servant à l'excitation et la seconde électrode (3) à la détection, le dit système comportant des moyens de mesure de la position A du dispositif selon cet axe à partir des mesures du courant délivré par les électrodes de détection, le signal issu desdits moyens représentatif de la position A étant représenté par une fonction U dépendant du temps, **caractérisé en ce que** ledit système comporte des premiers moyens permettant de calculer la fonction $\omega_1^2 - \dfrac{\rho_1^{(2)}}{\rho_1}$, $\omega_1$ étant la pulsation instantanée de U, $\rho_1$ son amplitude instantanée

    et $\rho_1^{(2)}$ la dérivée seconde de ladite amplitude instantanée, la fonction $\omega_1^2 - \dfrac{\rho_1^{(2)}}{\rho_1}$ étant représentative du carré de la pulsation de résonance $\Omega$ du dispositif vibrant, lesdits premiers moyens comprennent des moyens de calcul de la dérivée seconde de la fonction U notée $U^{(2)}$, de la transformée de Hilbert de la fonction U notée V, de la dérivée seconde de cette transformée de Hilbert notée $V^{(2)}$ ainsi que d'une première fonction égale à $-\dfrac{U.U^{(2)} + V.V^{(2)}}{U^2 + V^2}$

    mathématiquement égale à $\omega_1^2 - \dfrac{\rho_1^{(2)}}{\rho_1}$.

2.  Système d'analyse selon la revendication 1, **caractérisé en ce que**, lorsque l'équation différentielle représentative des variations de position A du dispositif comporte des termes de non-linéarité d'ordre 3, ledit dispositif comporte alors des seconds moyens permettant de réaliser, en utilisant les notations précédentes, une seconde fonction

    égale à $-\dfrac{V^{(2)}V + U^{(2)}U}{U^2 + V^2} - \beta_i[\dfrac{3}{4K_1^2}(U^2 + V^2)]$, représentative du carré de la pulsation de résonance $\Omega$ du dispositif vibrant, $\beta_i$ et $K_1$ étant des constantes.

3.  Système d'analyse selon la revendication 2, **caractérisé en ce que**, lorsque le dispositif vibrant est à oscillations forcées, c'est-à-dire que le dispositif comporte un asservissement en phase et en amplitude disposé de façon à éliminer l'amortissement naturel du dispositif, ledit asservissement générant une polarisation $V_0$, ledit dispositif comporte alors des troisièmes moyens permettant de réaliser, en utilisant les notations précédentes, une troisième

    fonction égale à $-\dfrac{V^{(2)}V + U^{(2)}U}{U^2 + V^2} - \beta_i[\dfrac{3}{4K_1^2}(U^2 + V^2) + 3\left(\dfrac{K_3 V_0^2}{-\dfrac{U\,U^{(2)} + V\,V^{(2)}}{U^2 + V^2}}\right)^2]$, représentative du carré de la pulsation de résonance $\Omega$ du dispositif vibrant, $\beta_i$, $K_1$ et $K_3$ étant des constantes.

4.  Système d'analyse selon l'une des revendications précédentes, **caractérisé en ce que** le carré de la pulsation de résonance est lié à un paramètre a à mesurer par la relation: $\Omega^2 = \omega_0^2(1 + \dfrac{a}{\gamma_c})$ $\gamma_c$ étant une constante, $\omega_0$

étant la pulsation initiale en l'absence dudit paramètre.

5. Système d'analyse selon la revendication 4, **caractérisé en ce que** le dispositif vibrant comprenant deux moyens de vibration identiques, chacun des moyens étant relié au système d'analyse, ledit système comportant :

• des moyens de mesure aptes à calculer d'une part, ou une première fonction ou une deuxième fonction ou une troisième fonction représentative du carré de la pulsation de résonance $\Omega_1$ du premier moyen de vibration et d'autre part ou une première fonction ou une deuxième fonction ou une troisième fonction représentative du carré de la pulsation de résonance $\Omega_2$ du second moyen de vibration ;

• des moyens de calcul des fonctions suivantes : $\Omega_1^2 - \dfrac{\omega_{01}^2}{\omega_{02}^2}\Omega_2^2$ et $\Omega_1^2 + \dfrac{\omega_{0,1}^2}{\omega_{0,2}^2}\dfrac{\gamma_{C,2}}{\gamma_{C,1}}\Omega_2^2$ en utilisant les mêmes notations que précédemment, les indices représentänt le premier ou le second moyen de vibration.

6. Système d'analyse selon l'une des revendications précédentes, **caractérisé en ce que** le système d'analyse est un système électronique, la fonction U étant un paramètre électrique, ledit système comportant des moyens de numérisation et d'échantillonnage de la fonction U, des premiers filtres à réponse impulsionnelle finie aptes à réaliser la transformée de Hilbert d'une fonction électronique, des seconds filtres à réponse impulsionnelle finie aptes à réaliser la dérivée d'une fonction électrique, des lignes à retard permettant de synchroniser les différents signaux échantillonnés, des moyens électroniques réalisant les fonctions de sommations, de multiplication et de division et des filtres coupe-bande et des filtres passe-bas.

## Patentansprüche

1. Analysesystem der Oszillationsfrequenz einer entlang einer Achse schwingenden Vorrichtung, wobei die Schwingungsvorrichtung eine mit zwei identischen und parallelen Balken (1) verbundene Masse umfasst, welche eine Stimmgabel bilden, wobei jeder Balken zwei Elektroden (2, 3) trägt, wobei die erste Elektrode (2) zur Anregung dient und die zweite Elektrode (3) zur Erkennung dient, wobei das System Mittel zum Messen der Position A der Vorrichtung entlang dieser Achse anhand von Messungen des durch die Erkennungselektroden abgegebenen Stroms umfasst, wobei das aus den Mitteln stammende, die Position A darstellende Signal durch eine zeitabhängige Funktion U dargestellt wird, **dadurch gekennzeichnet, dass** das System erste Mittel umfasst, welche die Berechnung der Funktion $\dfrac{\omega_1^2 - \dfrac{\rho_1^{(2)}}{\rho_1}}{}$ ermöglichen,

wobei $\omega_1$ die augenblickliche Pulsation von U ist, $\rho_1$ ihre augenblickliche Amplitude ist und $\rho_1^{(2)}$ die zweite Ableitung

der augenblicklichen Amplitude ist, wobei die Funktion $\omega_1^2 - \dfrac{\rho_1^{(2)}}{\rho_1}$ das Quadrat der Resonanzpulsation $\Omega$ der Schwingungsvorrichtung darstellt, wobei die ersten Mittel Berechnungsmittel der zweiten Ableitung der Funktion U, notiert $U^{(2)}$, der Hilbert-Transformation der Funktion U, notiert V, der zweiten Ableitung dieser Hilbert-Transformation,

notiert $V^{(2)}$, sowie einer ersten Funktion gleich $-\dfrac{U.U^{(2)} + V.V^{(2)}}{U^2 + V^2}$, welche mathematisch gleich $\omega_1^2 - \dfrac{\rho_1^{(2)}}{\rho_1}$ ist, umfassen.

2. Analysesystem nach Anspruch 1, **dadurch gekennzeichnet, dass**, wenn die Differenzialgleichung, welche die Variationen der Position A der Vorrichtung darstellt, Nichtlinearitäts-Terme der 3. Ordnung umfasst, die Vorrichtung zweite Mittel umfasst, welche es ermöglichen, unter Verwendung der vorherigen Notationen, eine zweite Funktion gleich $-\dfrac{V^{(2)}V + U^{(2)}U}{U^2 + V^2} - \beta_i[\dfrac{3}{4K_1^2}(U^2 + V^2)]$ zu schaffen, welche das Quadrat der Resonanzpulsation $\Omega$ der Schwingungsvorrichtung darstellt, wobei $\beta_i$ und $K_1$ Konstanten sind.

3. Analysesystem nach Anspruch 2, **dadurch gekennzeichnet, dass**, wenn die Schwingungsvorrichtung mit forcierten Oszillationen arbeitet, d. h., dass die Vorrichtung eine Phasen- und Amplitudenregelung besitzt, welche angeordnet ist, um die natürliche Dämpfung der Vorrichtung zu beseitigen, wobei die Regelung eine Polarisation $V_0$ erzeugt, die Vorrichtung dritte Mittel umfasst, welche es ermöglichen, unter Verwendung der vorherigen Notationen, eine

$$-\frac{V^{(2)}V+U^{(2)}U}{U^2+V^2}-\beta_i[\frac{3}{4K_1^2}(U^2+V^2)+3\left(\frac{K_3V_0^2}{-\frac{U\,U^{(2)}+V\,V^{(2)}}{U^2+V^2}}\right)^2]$$

dritte Funktion gleich $\qquad$ zu schaffen, welche das Quadrat der Resonanzpulsation Q der Schwingungsvorrichtung darstellt, wobei $\beta_i$, $K_1$ und $K_3$ Konstanten sind.

4. Analysesystem nach einem der vorhergehenden Ansprüche, **dadurch gekennzeichnet, dass** das Quadrat der Resonanzpulsation mit einem zu messenden Parameter durch folgende Beziehung verbunden ist:

$$\Omega^2=\omega_0^2(1+\frac{a}{\gamma_c})\qquad\gamma_c$$ wobei eine Konstante ist, wobei $\omega_0$ die Anfangspulsation bei Nichtvorliegen des Parameters ist.

5. Analysesystem nach Anspruch 4, **dadurch gekennzeichnet, dass** die Steuerungsvorrichtung zwei identische Schwingungsmittel umfasst, wobei jedes der Mittel mit dem Analysesystem verbunden ist, wobei das System Folgendes umfasst:

  • Messmittel, welche einerseits in der Lage sind, eine erste Funktion oder eine zweite Funktion oder eine dritte Funktion zu berechnen, welche das Quadrat der Resonanzpulsation $\Omega_1$ des ersten Schwingungsmittels darstellt, und andererseits, entweder eine erste Funktion oder eine zweite Funktion oder eine dritte Funktion zu berechnen, welche das Quadrat der Resonanzpulsation $\Omega_2$ des zweiten Schwingungsmittels darstellt;

  • Mittel zur Berechnung folgender Funktionen: $\Omega_1^2-\frac{\omega_{01}^2}{\omega_{02}^2}\Omega_2^2$ und $\Omega_1^2+\frac{\omega_{0,1}^2}{\omega_{0,2}^2}\frac{\gamma_{C,2}}{\gamma_{C,1}}\Omega_2^2$ , , unter Verwendung derselben Notationen wie zuvor, wobei die Indices das erste oder das zweite Schwingungsmittel darstellen.

6. Analysesystem nach einem der vorhergehenden Ansprüche, **dadurch gekennzeichnet, dass** das Analysesystem ein elektronisches System ist, wobei die Funktion U ein elektrischer Parameter ist, wobei das System Mittel zur Digitalisierung und Abtastung der Funktion U umfasst, wobei erste Filter mit endlicher Impulsantwort in der Lage sind, die Hilbert-Transformation einer elektronischen Funktion auszuführen, wobei zweite Filter mit endlicher Impulsantwort in der Lage sind, die Ableitung einer elektrischen Funktion auszuführen, wobei zeitverzögerte Leitungen es ermöglichen, die unterschiedlichen abgetasteten Signale zu synchronisieren, wobei elektronische Mittel die Summierungs-, Multiplikations- und Teilungsfunktionen sowie Bandsperrfilter und Tiefpassfilter ausführen.

## Claims

1. System for analyzing the ocillation frequency of a device vibrating along an axis, said vibrating device comprising a mass connected to two identical and parallel beams (1) forming a tuning fork, each beam carrying two electrodes (2, 3), the first electrode (2) serving for excitation and the second electrode (3) for detection, said system having means for measuring the position A of the device along said axis from the measurements of the current provided by the detection electrodes, the signal emanating from said means and representative of the position A being represented by a time dependent function U, **characterized in that** said system comprises first means making it possible to calculate the function $\omega_1^2-\frac{\rho_1^{(2)}}{\rho_1}$ , $\omega_1$ being the instantaneous impulse of U, $\rho_1$ its instantaneous amplitude and $\rho_1^{(2)}$ the second derivative of said instantaneous amplitude, the function $\omega_1^2-\frac{\rho_1^{(2)}}{\rho_1}$ being repre-

sentative of the square impulse of resonance $\Omega$ of the vibrating device, said first means comprise means for calculating the second derivative of the function U denoted $U^{(2)}$, of the Hilbert transform U denoted V, of the second derivative of this Hilbert transform denoted $V^{(2)}$ as well as a first function equal to $\dfrac{U.U^{(2)}+V.V^{(2)}}{U^2+V^2}$ mathematically equal

to $\omega_1^2 - \dfrac{\rho_1^{(2)}}{\rho_1}$ .

2. Analysis system according to claim 1, **characterized in that**, when the differential equation representative of the variations in the position A of the device has nonlinearity terms of order 3, said device then comprises second means making it possible to realize, using the previous notation, a second function equal to

$$-\frac{V^{(2)}V+U^{(2)}U}{U^2+V^2}-\beta_1[\frac{3}{4K_1^2}(U^2+V^2)]$$

, representative of the squarre of the impulse of resonance $\Omega$ of the vibrating device, $\beta_1$ and $K_1$ being constants.

3. Analysis system according to claim 2, **characterized in that**, when the vibrating device is of the forced oscillation type, that is to say that the device comprises a phase- and amplitude-slaving disposed in such a way as to eliminate the natural damping of the device, said slaving generating a polarization $V_0$, said device then comprises third means making it possible to realize, using the previous notation, a third function equal to

$$-\frac{V^{(2)}V+U^{(2)}U}{U^2+V^2}-\beta_1[\frac{3}{4K_1^2}(U^2+V^2)+3\left(\frac{K_3V_0^2}{-\dfrac{U\ U^{(2)}+V\ V^{(2)}}{U^2+V^2}}\right)^2]$$

, representative of the square of the impulse of resonance $\Omega$ of the vibrating device, $\beta_1$, $K_1$ and $K_3$ being constants.

4. Analysis system according to any of the preceding claims, **characterized in that** the square of the impulse of resonance is linked to a parameter a to be measured by the relation: $\Omega^2 = \omega_0^2(1+\dfrac{a}{\gamma_c})$ , $\gamma_c$ being a constant, $\omega_0$ being the initial impulse in the absence of said parameter.

5. Analysis system according to claim 4, **characterized in that** the vibrating device comprises two identical means of vibration, each of the means being connected to the analysis system, said system comprising:

   • measurement means able to calculate on the one hand, either a first function or a second function or a third function representative of the square of the impulse of resonance $\Omega_1$ of the first means of vibration and on the other hand either a first function or a second function or a third function representative of the square of the impulse of resonance $\Omega_2$ of the second means of vibration;

   • means for calculating the following functions: $\Omega_1^2 - \dfrac{\omega_{01}^2}{\omega_{02}^2}\Omega_2^2$ and $\Omega_1^2 + \dfrac{\omega_{0,1}^2}{\omega_{0,2}^2}\dfrac{\gamma_{c,2}}{\gamma_{c,1}}\Omega_2^2$ using the same notation as previously, the indices representing the first or the second means of vibration.

6. Analysis system according to any of the preceding claims, **characterized in that** the analysis system is an electronical system, the function U being an electrical parameter, said system comprising means of digitizing and sampling the function U, first finite impulse response filters able to realize the Hilbert transform of an electronic function, second finite impulse response filters able to realize the derivative of an electrical function, delay lines making it possible to synchronize the various sampled signals, electronic means realizing the functions of summations, multiplication and division and band-stop filters and low-pass filters.

**FIG. 1**

FIG. 2

FIG. 3

**EP 1 995 575 B1**